# EUROPÄISCHE PATENTANMELDUNG

(11) **EP 4 438 208 A1**
(43) Veröffentlichungstag der Anmeldung: **02.10.2024**
(21) Anmeldenummer: 23164794.2
(22) Anmeldetag: 28.03.2023
(51) Int. Cl.: B23B 47/26, B23B 49/00

(54) **GERÄTESYSTEM UND VERFAHREN ZUR ERMITTLUNG EINER TIEFE EINER BOHRUNG, DIE MIT DEM GERÄTESYSTEM ERZEUGT WIRD**

(71) Anmelder: Hilti Aktiengesellschaft, 9494 Schaan (LI)
(72) Erfinder: Rieger, Hans-Joerg, 6712 Thueringen (AT)
(74) Vertreter: Hilti Aktiengesellschaft Corporate Intellectual Property

(57) **Zusammenfassung**

Die vorliegende Erfindung betrifft ein Gerätesystem, das einen Geräteständer, ein am Geräteständer verschiebbar angeordnetes Bohrgerät zur Durchführung einer Bohrung und eine manuelle Vorschubvorrichtung zum Verschieben des Kernbohrgerätes entlang des Geräteständers umfasst. Das Gerätesystem umfasst eine Steuereinrichtung zur Auswertung von Messwerten für die Bestimmung einer Bohrtiefe, wobei die Messwerte mit mindestens einem Sensor ermittelt werden, wobei der mindestens eine Sensor an dem Geräteständer oder der manuellen Vorschubvorrichtung angeordnet vorliegt. Die Messwerte werden zur Auswertung von dem mindestens einen Sensor an die Steuereinrichtung übermittelt, wobei ein Startpunkt und/oder ein Endpunkt der Bohrung von der Steuereinrichtung durch eine sprunghafte Veränderung von Bohrparametern erkannt wird. In einem zweiten Aspekt betrifft die Erfindung ein Verfahren zur Ermittlung einer Tiefe einer Bohrung, wobei die Bohrung mit dem vorgeschlagenen Gerätesystem erzeugt wird.

## Beschreibung

Die vorliegende Erfindung betrifft ein Gerätesystem, das einen Geräteständer, ein am Geräteständer verschiebbar angeordnetes Bohrgerät zur Durchführung einer Bohrung und eine manuelle Vorschubvorrichtung zum Verschieben des Kernbohrgerätes entlang des Geräteständers umfasst. Das Gerätesystem umfasst eine Steuereinrichtung zur Auswertung von Messwerten für die Bestimmung einer Bohrtiefe, wobei die Messwerte mit mindestens einem Sensor ermittelt werden, wobei der mindestens eine Sensor an dem Geräteständer oder der manuellen Vorschubvorrichtung angeordnet vorliegt. Die Messwerte werden zur Auswertung von dem mindestens einen Sensor an die Steuereinrichtung übermittelt, wobei ein Startpunkt und/oder ein Endpunkt der Bohrung von der Steuereinrichtung durch eine sprunghafte Veränderung von Bohrparametern erkannt wird. In einem zweiten Aspekt betrifft die Erfindung ein Verfahren zur Ermittlung einer Tiefe einer Bohrung, wobei die Bohrung mit dem vorgeschlagenen Gerätesystem erzeugt wird.

### Hintergrund der Erfindung:

Beispielsweise aus DE 10 2004 033 361 A1 ist ein Gerätesystem bestehend aus einem Geräteständer, einem am Geräteständer verschiebbar angeordneten Bohrgerät und einer Vorschubvorrichtung zum Verschieben des Bohrgerätes entlang des Geräteständers bekannt. Die Vorschubvorrichtung kann beispielsweise als manuelle Vorschubvorrichtung ausgebildet sein.

Bei ständergeführten Bohrgeräten werden allerdings häufig manuelle Vorschubeinrichtungen eingesetzt, bei denen der Vorschub rein mechanisch über ein Handrad erzeugt wird. Für solche Gerätesysteme mit manuellen Vorschubeinrichtungen ist bisher im Stand der Technik keine befriedigende Lösung bekannt, um die Tiefe einer Bohrung, die mit dem Gerätesystem erzeugt wird, zu bestimmen.

Aufgabe der vorliegenden Erfindung ist es, die vorstehend beschriebenen Nachteile und Mängel des Standes der Technik zu überwinden und ein Gerätesystem und ein Verfahren zur Ermittlung einer Tiefe einer Bohrung für ständergeführte Bohrgeräte mit manueller Vorschubeinrichtung, beispielsweise einem Handrad, anzugeben.

Die Aufgabe wird durch den Gegenstand der unabhängigen Ansprüche gelöst. Vorteilhafte Ausführungsformen zu dem Gegenstand der unabhängigen Ansprüche finden sich in den abhängigen Unteransprüchen.

### Beschreibung der Erfindung:

Die Aufgabe wird gelöst durch ein Gerätesystem umfassend einen Geräteständer, ein am Geräteständer verschiebbar angeordnetes Bohrgerät zur Durchführung einer Bohrung und eine manuelle Vorschubvorrichtung zum Verschieben des Bohrgerätes entlang des Geräteständers, wobei das Gerätesystem eine Steuereinrichtung zur Auswertung von Messwerten für die Bestimmung einer Bohrtiefe umfasst. Das Gerätesystem umfasst mindestens einen Sensor zur Ermittlung der Messwerte, wobei der mindestens eine Sensor dazu eingerichtet ist, die Messwerte an die Steuereinrichtung zu übermitteln, wobei ein Startpunkt und/oder Endpunkt der Bohrung von der Steuereinrichtung durch eine sprunghafte Veränderung von weiteren Bohrparametern erkannt wird. Dabei kann eine Tiefe der Bohrung unter Verwendung eines Übersetzungsverhältnisses und einer Anzahl von Umdrehungen einer an einer Vorschubbewegung des Bohrgeräts beteiligten, rotierenden Komponente des Gerätesystems bestimmt werden.

Es ist im Sinne der Erfindung bevorzugt, dass der mindestens eine Sensor zur Ermittlung von Messwerten an dem Geräteständer oder der manuellen Vorschubvorrichtung angeordnet vorliegt, wobei die Messwerte von dem mindestens einen Sensor und an die Steuereinrichtung zur Durchführung der Auswertung übermittelt werden können. Mit der vorgeschlagenen Erfindung kann vorteilhafterweise eine Möglichkeit bereitgestellt werden, für ständergeführte Bohrgeräte mit manueller Vorschubeinrichtung die Tiefe eines erzeugten Bohrlochs zu bestimmen. Vorzugsweise kann die manuelle Vorschubeinrichtung auch als "Bedienteil" bezeichnet werden. Es ist im Sinne der Erfindung bevorzugt, dass die manuelle Vorschubeinrichtung als Handrad ausgebildet ist. Alternativ kann die manuelle Vorschubeinrichtung von einem Hebel gebildet werden. Vorzugsweise wird das Handrad gedreht bzw. der Hebel gedreht oder betätigt, um einen Vorschub des Bohrgeräts zu bewirken. Die Bohrtiefe bzw. die Tiefe der Bohrung durch das Bohrgerät hängen vorzugsweise mit einem Verfahrweg des Bohrgeräts entlang des Geräteständers zusammen. Insbesondere kann die Tiefe der mit dem Bohrgerät erzeugten Bohrung aus dem Verfahrweg des Bohrgeräts entlang des Geräteständers abgeleitet werden.

Es ist im Sinne der Erfindung bevorzugt, dass eine Anzahl der Drehungen des Bedienteils und/oder eines anderen für die Erzeugung der Vorschubbewegung benötigten rotierenden Bauteil des Gerätesystems gemessen wird. Der mindestens eine Sensor, der vorzugsweise diese Messung bzw. Ermittlung übernimmt, kann an verschiedenen Orten innerhalb des Gerätesystems angeordnet vorliegen, beispielsweise am oder im Bedienteil bzw. der manuellen Vorschubeinrichtung. Der mindestens eine Sensor kann auch einer zwischen Bedienteil und Führungsgehäuse vorliegenden Komponente des Gerätesystems angeordnet vorliegen. Eine solche Zwischenkomponente kann beispielsweise einen Adapter umfassen, mit dem das Handrad als Bedienteil an dem Geräteständer befestigt werden kann. Die Zwischenkomponente kann auch als Ausnahmevorrichtung ausgebildet sein, um eine automatische Vorschubeinrichtung oder andere optionale Komponenten des Gerätesystems aufzunehmen. Die Zwischenkomponente kann beispielsweise so ausgebildet sein, dass sie zwischen dem Geräteständer und dem Bedienteil angeordnet vorliegt und Mittel zur Befestigung für die manuelle Vorschubeinrichtung umfasst. Alternativ oder ergänzend kann der mindestens eine Sensor an einem rotierenden Bestandteil im oder am Führungsgehäuse selbst angeordnet vorliegen. Es hat sich als besonders vorteilhaft erwiesen, wenn der mindestens eine Sensor an einem rotierenden Bestandteil im oder am Führungsgehäuse oder am Bedienteil angeordnet vorliegt. Darüber hinaus kann der Sensor an dem Geräteständer oder an der Zwischenkomponente angeordnet vorliegen. Durch eine solche Anordnung können die erfassten Drehungen besonders präzise ermittelt werden, so dass die sprunghafte Veränderung der Bohrparameter besonders sicher erkannt werden kann.

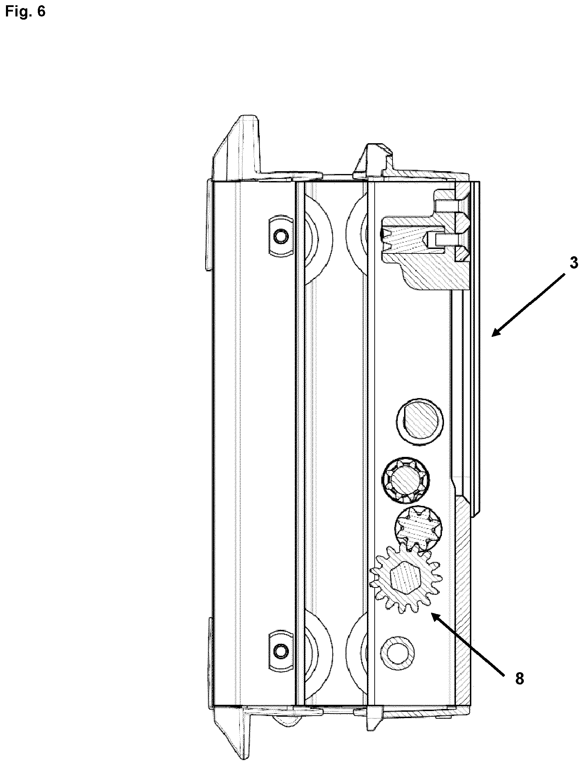

Bei den rotierenden Bestandteilen des Gerätesystems kann es sich beispielsweise um Zahnräder im Führungsgehäuse (siehe Figur 6) oder das als Handrad ausgebildete Bedienteil handeln. Selbstverständlich können auch die Drehungen jeder anderen drehbaren Komponente des Gerätesystems erfasst und ausgewertet werden, um die Tiefe einer Bohrung zu ermitteln. Die rotierenden Bestandteile des Gerätesystems werden vorzugsweise dafür benötigt, um eine rotatorische Bewegungen in eine translatorische Bewegung umzuwandeln bzw. zu übersetzen. Beispielsweise können die über das manuelle Bedienelement eingebrachten Bedienkräfte über rotierende Elemente, wie Zahnräder, Kettenräder, Spindeln, Reibrollen oder dergleichen, ohne darauf beschränkt zu sein, an weitere Bestandteile des Gerätesystems, wie Zahnstangen, Ketten und/oder Spindelmuttern übertragen werden. Vorzugsweise kann das als Handrad oder Knebel ausgebildete manuelle Bedienelement die durch den Bediener eingebrachte Kraft auf ein Zahnrad, eine Spindel und/oder ein Kettenrad übertragen. Es ist im Sinne der Erfindung bevorzugt, dass das Gerätesystem auch Kombinationen der zuvor beschriebenen Bestandteile umfasst, um Über- oder Untersetzungen mittels einer oder mehreren Getriebestufen zu ermöglichen.

Vorzugsweise ist das Gerätesystem dazu eingerichtet, Bohrlöcher zu erzeugen und Bohrvorgänge durchzuführen. Das vorgeschlagene Gerätesystem kann insofern im Sinne der Erfindung als Bohrsystem bezeichnet werden. Der Geräteständer, das Bohrgerät, die manuelle Vorschubeinrichtung, sowie die Steuereinrichtung können im Sinne der Erfindung bevorzugt als Komponenten oder als Bestandteile des Gerätesystems bezeichnet werden.

Der Geräteständer umfasst vorzugsweise eine Führungsschiene und einen Führungsschlitten zur Aufnahme des Bohrgeräts, wobei das Bohrgerät über den Führungsschlitten an der Führungsschiene angeordnet ist und mittels der Vorschubvorrichtung entlang der Führungsschiene verschiebbar ist. Die Vorschubvorrichtung umfasst insbesondere eine manuelle Vorschubeinrichtung, die als Handrad oder als Hebel ausgebildet sein kann. Der Führungsschlitten kann im Sinne der Erfindung bevorzugt auch als "Führungsgehäuse" bezeichnet werden, wobei das Führungsgehäuse vorzugsweise einen Bestandteil des Bohr- oder Geräteständers darstellt.

Das Bohrgerät kann mit der manuellen Vorschubeinrichtung entlang der Führungsschiene verfahren werden. Wenn die manuelle Vorschubeinrichtung als Handrad ausgebildet ist, kann es mehrere Griffteile umfassen, die schwenkbar angeordnet sind und die drehfest mit dem Führungsschlitten des Geräteständers gekoppelt sind. Vorzugsweise kann die manuelle Vorschubeinrichtung am Geräteständer montiert vorliegen. Durch Verkippen mindestens eines Griffteils kann das Handrad bewegt und eine Vorschubbewegung des Bohrgeräts erzeugt werden. Dazu wird in ein durch die manuelle Vorschubeinrichtung erzeugter Vorschub auf das Bohrgerät des Gerätesystems übertragen.

Es ist im Kontext der Erfindung vorgesehen, dass der mindestens eine zur Ermittlung der Bohrtiefe benötigten Sensor in der Vorschubeinrichtung, im Bohrständer oder in einem Adapterteil zwischen Bohrständer und Vorschubeinrichtung angeordnet vorliegen kann. Es ist im Kontext der Erfindung vorgesehen, dass die zur Bestimmung der Bohrtiefe erforderlichen Messwerte über ein oder mehrere Sensoren erfasst werden können, welche in der Vorschubeinrichtung, im Bohrständer oder in zwischen Bohrständer und Vorschubeinrichtung angeordnet vorliegen können. Bei den Messwerten kann es sich beispielsweise um Beschleunigungswerte handeln, wenn der entsprechende Sensor ein Beschleunigungssensor ist. Vorzugweise beschreibt der Begriff "Messwert" im Sinne der Erfindung Werte oder Parameter, die die Position eines Objekts angeben oder beschreiben. Mit solchen Positionswerten können beispielsweise Winkel, insbesondere Drehwinkel, oder Umdrehungsangaben, zum Beispiel die Anzahl von Umdrehungen, gemeint sein. Es ist im Sinne der Erfindung bevorzugt, dass der mindestens eine Sensor an einem drehbaren Teil oder auf ein drehbares Teil schauend angebracht ist. Dabei kann es sich beispielsweise um die Achse der als Handrad ausgebildeten manuellen Vorschubeinrichtung handeln. Dies ist insbesondere dann von Vorteil, wenn der Sensor ein Gyrosensor ist.

Vorzugsweise kann der mindestens eine Sensor an einer Ausnahmevorrichtung zur Aufnahme der Vorschubvorrichtung angeordnet vorliegen. Es können auch zwei oder mehrere Sensoren innerhalb des Gerätesystems vorgesehen sein, wobei es sich beispielsweise bei den Sensoren zur Aufnahme der Messwerte und/oder der Drehwinkel insbesondere um Beschleunigungssensoren, Gyrosensoren, optische Sensoren und/oder um Magnetometer handeln kann. In diesem Ausführungsbeispiel der Erfindung können die Drehwinkel zur Auswertung an die Steuereinrichtung des vorgeschlagenen Bohrsystems übermittelt werden, wobei Startpunkte und vorzugsweise auch Endpunkte der Bohrung von der Steuereinrichtung durch eine sprunghafte Veränderung von mindestens einem weiteren Bohrparameter erkannt werden. Bohrparameter sind beispielsweise physikalischen Größen oder Kenngrößen, die den Fortschritt des Bohrvorgangs oder Vorgänge innerhalb der Komponenten des vorgeschlagenen Bohrsystems beschreiben. Geeignete Bohrparameter sind insbesondere elektrische Größen, wie Spannung, Strom und/oder Leistung, ohne darauf beschränkt zu sein.

Es ist im Sinne der Erfindung ganz besonders bevorzugt, dass der Beginn des Bohrprozesses durch einen sprunghaften Anstieg einer Leistungsaufnahme und am Ende der Bohrung durch einen sprunghaften Abfall der Leistungsaufnahme des Motors des Bohrgeräts erkannt wird. In dieser bevorzugten Ausgestaltung der Erfindung stellt die Leistung bzw. die Leistungsaufnahme des Bohrgerätmotors den Bohrparameter dar, der zu Bestimmung des Start- oder Endpunkts des Bohrvorgangs verwendet wird. Vorzugsweise steigt die Leistungsaufnahme des Motors des Kernbohrgeräts stark an, wenn die Bohrkrone des Bohrgeräts Kontakt zu dem zu bearbeitenden Untergrund bekommt und der Bohrvorgang beginnt.

Es ist vorgesehen, dass eine Tiefe der Bohrung unter Verwendung eines Übersetzungsverhältnisses und einer Anzahl von Umdrehungen der manuellen Vorschubeinrichtung bestimmbar ist. Dabei kann die Anzahl von Umdrehungen der manuellen Vorschubeinrichtung auf Grundlage der Messwerte, die mit dem mindestens einen Sensor ermittelt werden, ermittelt werden. Die Auswertungen und Berechnungen erfolgen vorzugsweise in der Steuereinrichtung bzw. sie werden in der Steuereinrichtung durchgeführt. Der Begriff "Übersetzungsverhältnis" ist im Sinne der Erfindung vorzugsweise als Anzahl der Drehungen des Handrads oder des Hebels zu verstehen, die durchgeführt werden, um mit der manuellen Vorschubeinrichtung einen gewünschten Vorschub zu erreichen.

Wenn die manuelle Vorschubeinrichtung als Handrad ausgebildet ist, ist es im Sinne der Erfindung bevorzugt, dass die Anzahl der Umdrehungen des Handrades verwendet wird, um gemeinsam bzw. in Kombination mit dem Übersetzungsverhältnis zur Bestimmung der Bohrlochtiefe beizutragen. Dies gilt in analoger Weise für die Betätigung des Hebels, wenn die manuelle Vorschubeinrichtung von einem Hebel gebildet wird.

Es ist im Sinne der Erfindung bevorzugt, dass der Begriff "Bohrung" sowohl für den Prozess des Bohrvorgangs verwendet wird, als auch für das durch die Bohrung erzeugte Bohrloch. Der Begriff "Startpunkt der Bohrung" ist somit vorzugsweise als "Beginn des Bohrvorgangs" zu verstehen, währen der Begriff "Tiefe der Bohrung" die "Tiefe des Bohrlochs" beschreibt. Gemeint ist damit bevorzugt der Längenfortschritt, der bei einem Bohrvorgang erzeugt wird. Wenn sich die Bohrkrone des Bohrgeräts beispielsweise 20 cm in einen Untergrund hineinschneidet, wird vorzugsweise diese Länge von 20 cm als "Tiefe der Bohrung" oder als "Tiefe des Bohrlochs" verstanden. Es ist im Sinne der Erfindung bevorzugt, dass als Startpunkt der Bohrung eine sprunghafte bzw. abrupte Veränderung von Bohrparametern verwendet wird. Der Begriff "Startpunkt der Bohrung" ist insbesondere als Zeitpunkt zu verstehen, d.h. als zeitlicher Startpunkt des Bohrvorgangs.

Der Begriff des "Endpunktes einer Bohrung" kann im Sinne der Erfindung bevorzugt als der Punkt verstanden werden, an dem das Werkzeug des Bohrgeräts den zu bearbeitenden Boden erreicht oder eine zu durchbohrende Wand durchdringt. Der entsprechende Zeitpunkt, an dem der Endpunkt der Bohrung erreicht wird, ist vorzugsweise dadurch gekennzeichnet, dass die aufgenommene Leistung am Bohrgerät schlagartig abnimmt.

Es ist im Sinne der Erfindung bevorzugt, dass das Bohrgerät eine Bohrkrone als Werkzeug, sowie einen Motor zum Antrieb der Bohrkrone umfasst. Vorzugsweise kann ein Startpunkt der Bohrung von der Steuereinrichtung des Gerätesystems durch einen sprunghaften Anstieg einer Leistungsaufnahme des Motors erkannt werden. Der sprunghafte Anstieg der Leistungsaufnahme des Motors stellt dabei bevorzugt eine sprunghafte Veränderung eines Bohrparameters dar. Es im Sinne der Erfindung bevorzugt, dass der sprunghafte Anstieg der Leistungsaufnahme des Motors mit dem Beginn des Bohrvorgangs zusammenfällt, da der Anstieg der Leistungsaufnahme des Motors insbesondere dadurch hervorgerufen wird, dass die Bohrkrone in Kontakt mit dem von dem Bohrgerät zu bearbeitenden Untergrund gelangt.

Es ist im Sinne der Erfindung bevorzugt, dass ermittelte und/oder ausgewertete Messdaten zum Auslösen von Funktionen des Bohrsystems oder von Komponenten des Bohrsystems verwendbar sind. Mit anderen Worten ist es im Sinne der Erfindung bevorzugt, dass mindestens eine weitere Funktion des Gerätesystems auf Grundlage der Tiefe der Bohrung ausgelöst werden kann. Diese weiteren Funktionen können insbesondere darin bestehen, dass ein akustisches und/oder optisches Signal ausgegeben wird oder darin, dass ein Bohrantrieb abgeschaltet wird. Beispielsweise kann das vorgeschlagenen Gerätesystem ein akustisches Signal abgeben, wenn eine bestimmte, zum Beispiel zuvor eingegebene Bohrtiefe erreicht ist. Wenn beispielsweise die Dicke einer zu durchbohrenden Wand bekannt ist und ein sanfter Durchbruch auf der Rückseite der Wand gewünscht ist, kann der Bediener des Bohrsystems vor dem Durchbruch durch die Wand mit einem akustischen Signal über den bevorstehenden Durchbruch gewarnt werden, so dass der Bediener beispielsweise die Vorschubkraft manuell verringern kann, um einen saften Wanddurchbruch zu erreichen. Es kann im Sinne der Erfindung auch bevorzugt sein, dass der Antrieb des Bohrgeräts abgeschaltet wird, wenn eine bestimmte Bohrlochtiefe erreicht wird. Ferner ist es im Kontext der vorliegenden Erfindung vorstellbar, dass der Antrieb des Bohrgeräts in Abhängigkeit von der Tiefe der Bohrung geregelt und/oder gesteuert wird. Das bedeutet beispielsweise, dass das Gerätesystem dazu eingerichtet ist, die Bohrgeschwindigkeit bzw. eine Umdrehungsgeschwindigkeit der Bohrkrone in Abhängigkeit von der Tiefe der Bohrung einzustellen.

Es ist im Sinne der Erfindung bevorzugt, dass die Steuereinrichtung des vorgeschlagenen Gerätesystems Bestandteil des Bohrgeräts oder der Vorschubeinrichtung ist. Mit anderen Worten kann die Steuereinrichtung in dem Bohrgerät und/oder in der Vorschubeinrichtung integriert vorliegen. Es kann im Sinne der Erfindung auch bevorzugt sein, dass die Steuereinrichtung eine separate Einrichtung innerhalb des Gerätesystems bildet. Vorzugsweise umfasst die Steuereinrichtung einen Prozessor, der bevorzugt dazu eingerichtet ist, die erfassten Messwerte, beispielsweise Drehwinkel und/oder die erfasste Leistung bzw. Leistungsaufnahme des Motors, auszuwerten und informationstechnologisch weiterzuverarbeiten.

Es ist im Sinne der Erfindung bevorzugt, dass der Sensor als Hall-Sensor oder als Gyrosensor ausgebildet ist. Denkbar ist auch die Verwendung eines Beschleunigungssensors oder von optischen Sensoren. Es ist im Sinne der Erfindung ganz besonders bevorzugt, dass der mindestens eine verwendete Sensor dazu eingerichtet ist zu erkennen, in welche Richtung das Bedienteil gedreht wird. Ferner ist es im Kontext der vorliegenden Erfindung bevorzugt, dass die Sensoren dazu eingerichtet sind, unabhängig von der Lage des Bohrgeräts die Anzahl der Umdrehungen der manuellen Vorschubeinrichtung zu erfassen. Beispielsweise kann das Bohrgerät am Boden, im Bereich einer Raumdecke, gerade oder schräg gelagert betrieben werden. Es war für die Fachwelt überraschend, dass mit der Erfindung ein Gerätesystem zur Ermittlung der Bohrtiefe bereitgestellt werden kann, das insbesondere unabhängig von der Lage des Bohrgeräts die Umdrehungen der manuellen Vorschubeinrichtung erkennen kann.

In einer bevorzugten Ausführungsform der Erfindung erfolgt eine Übermittlung der von dem Sensor an die Steuereinrichtung kabelgebunden oder kabellos. Vorzugsweise ist der Motor des Bohrgeräts als Elektromotor ausgebildet.

Es ist im Sinne der Erfindung bevorzugt, dass das Bohrsystem eine Anzeigevorrichtung zur Anzeige von ermittelten und/oder ausgewerteten Daten umfasst. Vorzugsweise kann die Anzeigevorrichtung als Display, Bildschirm, Monitor, Touch-Bildschirm oder als Screen ausgebildet sein, ohne darauf beschränkt zu sein. Es ist im Sinne der Erfindung ganz besonders bevorzugt, dass die Anzeigevorrichtung dazu eingerichtet ist, die ermittelte Tiefe des Bohrlochs anzuzeigen. Dies kann beispielsweise grafisch oder mittels nummerischer Werte erfolgen. Beispielsweise kann die Anzeigevorrichtung ein Dashboard anzeigen, auf dem verschiedene Informationen für den Bediener des Bohrgeräts angezeigt werden können.

Es ist im Sinne der Erfindung bevorzugt, dass eine gebohrte Tiefe, die mit dem vorgeschlagenen System ermittelt wird, an einen Empfänger zur weiteren Verarbeitung übermittelt werden kann. Dabei kann es sich beispielsweise um ein Backoffice eines Bauunternehmens handeln, in dem die Daten, beispielsweise zu Abrechnungszwecken, ausgewertet und informationstechnologisch weiterverarbeitet werden.

Es ist im Sinne der Erfindung bevorzugt, dass die Anzeigevorrichtung Bestandteil des Bohrgeräts oder der Vorschubeinrichtung ist. Das bedeutet, dass die Anzeigevorrichtung an dem Bohrgerät angeordnet vorliegen kann, d.h. eine Komponente des Bohrgeräts darstellt. Alternativ kann die Anzeigevorrichtung an der Vorschubeinrichtung angeordnet vorliegen, d.h. eine Komponente der Vorschubvorrichtung darstellen. Es kann im Sinne der Erfindung darüber hinaus bevorzugt sein, dass eine Anzeige von Daten auch über eine externe Vorrichtung erfolgen kann. Bei der externen Vorrichtung kann es sich beispielsweise um eine mobile Kommunikationsvorrichtung, wie ein Smartphone oder einen Laptop, handeln.

In einem zweiten Aspekt betrifft die Erfindung ein Verfahren zur Ermittlung einer Tiefe einer Bohrung, wobei die Bohrung mit einem vorgeschlagenen Gerätesystem erzeugt wird. Das vorgeschlagene Verfahren ist durch folgende Verfahrensschritte gekennzeichnet:
a) Erfassung von mindestens einem Bohrparameter des Gerätesystems,
b) Ableitung eines Startpunkts und/oder Endpunkts der Bohrung aus dem unter a) erfassten Bohrparameter,
c) Erfassung von Messwerten mittels eines Sensors,
d) Übermittlung der Messwerte an eine Steuereinrichtung,
e) Bestimmung der Tiefe einer Bohrung basierend auf den unten c) erfassten Messwerten.

Dabei wird ein Startpunkt und/oder Endpunkt der Bohrung von der Steuereinrichtung durch eine sprunghafte Veränderung von weiteren Bohrparametern erkannt, wobei eine Tiefe der Bohrung unter Verwendung eines Übersetzungsverhältnisses und einer Anzahl von Umdrehungen einer an einer Vorschubbewegung des Bohrgeräts beteiligten, rotierenden Komponente des Gerätesystems bestimmbar ist. Die für das Gerätesystem beschriebenen Definitionen, technischen Wirkungen und Vorteile gelten für das vorgeschlagene Verfahren analog. Bei der Bestimmung der Tiefe der Bohrung kann zunächst eine Anzahl von Umdrehungen der manuellen Vorschubeinrichtung bestimmt werden, wobei die Anzahl von Umdrehungen der manuellen Vorschubeinrichtung als Basis bzw. Datengrundlage für die Bestimmung der Tiefe der Bohrung herangezogen wird.

Bei dem Bohrparameter des Gerätesystems kann es sich vorzugsweise um die Leistungsaufnahme des Motors des Bohrgeräts handeln. Mit anderen Worten kann das vorgeschlagene Verfahren die Schritte a) Erfassung einer Leistungsaufnahme eines Motors des Bohrgeräts und b) Ableitung eines Startpunkts der Bohrung aus den unter a) erfassten Leistungsaufnahmedaten umfassen. Es ist im Sinne der Erfindung bevorzugt, dass der Bohrparameter bzw. die Leistungsaufnahme des Motors mit einer entsprechenden Sensorik erfasst und an die Steuereinrichtung des Gerätesystems weitergeleitet werden kann. Diese Datenweiterleitung kann vorzugsweise kabelgebunden oder kabellos erfolgen. Die Daten können in der Steuereinrichtung informationstechnologisch weiterverarbeitet werden, was beispielsweise durch eine Analyse, Filterung oder dergleichen erfolgen kann. Insbesondere werden die erfassten Werte für den Bohrparameter oder die Leistungsaufnahme des Motors dazu verwendet, einen Startpunkt der Bohrung bzw. einen Beginn des Bohrvorgangs abzuleiten bzw. daraus zu bestimmen. Diese Bestimmung kann vorzugsweise in bzw. von der Steuereinrichtung des Gerätesystems durchgeführt werden. Ferner werden im Kontext der Erfindung Messwerte, wie Drehwinkel und/oder Positionswerte, erfasst. Dazu kann die Vorschubvorrichtung bzw. die mobile Vorschubvorrichtung eine entsprechende Sensorik umfassen, die vorzugsweise mindestens einen Gyro- oder Beschleunigungssensor oder ein Magnetometer umfassen kann.

Es kann im Sinne der Erfindung ferner bevorzugt sein, zusätzlich denjenigen Bereich zu erfassen, der zwischen dem Startpunkt und dem Endpunkt der Bohrung liegt. Dabei kann es sich um eine Zeitspanne und/oder um einen räumlichen Abstand zwischen Start- und Endpunkt der Bohrung handeln. Dieser Bereich wird insbesondere durch die sich jeweils entgegengesetzt abrupt ändernden Bohrparameter, wie zum Beispiel durch die Leistung des Bohrgerät-Motors, gekennzeichnet. Beispielweise kann der Startpunkt der Bohrung von einem starken Leistungsanstieg und der Endpunkt der Bohrung von einem starken Leistungsabfall gekennzeichnet sein. Dadurch wird die Erfassung der Bohrtiefe weiter erleichtert bzw. sie kann genauer gestaltet werden.

Es ist vorgesehen, dass das aus einer Anzahl von Umdrehungen eines an der manuellen Vorschubbewegung beteiligten, rotierenden Bauteils und einem Übersetzungsverhältnis, eine Tiefe der Bohrung bestimmt wird.

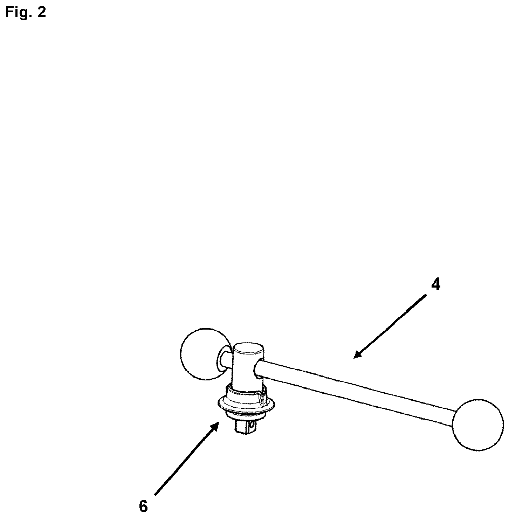

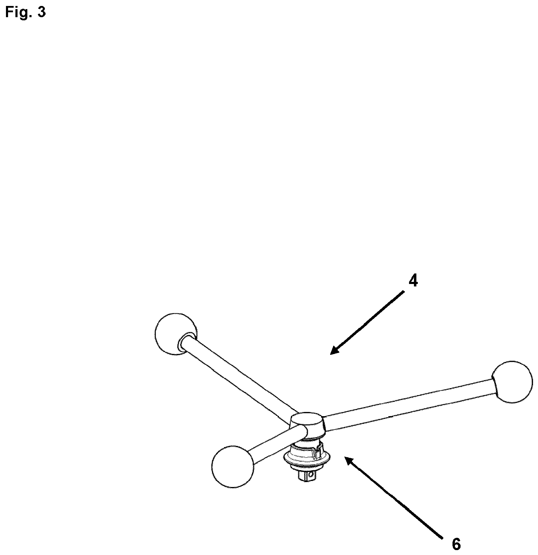

Vorzugsweise kann ein Hall-Sensor vorzugsweise so angeordnet sein, dass ein Erfassungsbereich des Sensors auf ein drehbares Teil oder von einem drehbaren auf ein stehendes Teil gerichtet ist. Mögliche Anordnungen des Sensors sind in den Fig. 2 und 3 dargestellt.

Es ist im Sinne der Erfindung bevorzugt, dass der mindestens eine Sensor des Gerätesystems dazu eingerichtet ist, einen Messwert, wie einen Drehwinkel, des Handrads bzw. von Bestandteilen des Handrades zu erfassen, wobei aus diesem Messwert bzw. Drehwinkel eine Anzahl von Umdrehungen des Handrads ermittelt werden kann.

Dazu werden die von dem Sensor erfassten Drehwinkel als Messwerte an die Steuereinrichtung weitergeleitet, wobei diese Datenweiterleitung vorzugsweise kabelgebunden oder kabellos erfolgen kann. Es ist im Sinne der Erfindung bevorzugt, dass die Bestimmung einer Anzahl von Umdrehungen des Handrades in der bzw. durch die Steuereinrichtung des Gerätesystems durchgeführt wird. Erfindungsgemäß ist dann vorgesehen, dass die Tiefe der Bohrung bzw. des Bohrlochs aus der Anzahl von Umdrehungen des Handrads und eines Übersetzungsverhältnisses bestimmt wird.

Es ist im Sinne der Erfindung bevorzugt, dass die Tiefe der Bohrung auf einer Anzeigenvorrichtung des Gerätesystems angezeigt wird. Beispielsweise kann die Tiefe des Bohrlochs auf einem Display des Bohrgeräts angezeigt werden.

Bei dem Bohrgerät kann es sich insbesondere um eine Diamantwerkzeugmaschine handeln, insbesondere ein Kernbohrgerät, das dazu eingerichtet ist, zylinderförmige Bohrkerne zu erzeugen und aus einem zu bearbeitenden Untergrund herauszuschneiden. Das Werkzeug einer solchen Werkzeugmaschine, mit dem der Bohrkern erzeugt wird, wird im Sinne der Erfindung bevorzugt als Bohrkrone bezeichnet. Mit anderen Worten ist es im Sinne der Erfindung bevorzugt, dass das Bohrgerät eine Bohrkrone als Werkzeug umfasst. Insofern ermöglicht die Erfindung insbesondere eine Bohrtiefenmessung bei ständergeführten Kernbohrgeräten

Weitere Vorteile der Erfindung ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: schematische Darstellung einer bevorzugten Ausführungsform der Erfindung
- Fig. 2: Darstellung einer als Hebel ausgebildeten manuellen Vorschubeinrichtung
- Fig. 3: Darstellung einer als Handrad ausgebildeten manuellen Vorschubeinrichtung
- Fig. 4: weitere Darstellung einer bevorzugten Ausführungsform der Erfindung
- Fig. 5: Darstellung einer Zwischenkomponente bzw. eines Adapters
- Fig. 6: Darstellung eines Führungsgehäuses

### Ausführungsbeispiel und Figurenbeschreibung

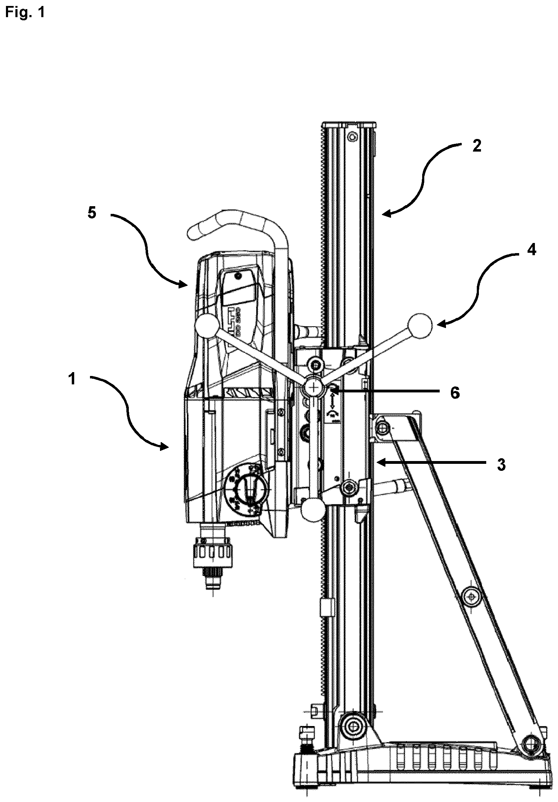

Fig. 1 zeigt eine beispielhafte Ausgestaltung der Erfindung. Insbesondere zeigt Fig. 1 ein Gerätesystem mit einem Bohrgerät (1), einem Geräteständer (2) und einer manuellen Vorschubeinrichtung (4). Die manuelle Vorschubeinrichtung (4) kann als Handrad oder als Hebel ausgebildet sein, wie in Fig. 1 dargestellt. Das Bohrgerät (1) kann an dem Bohr- oder Geräteständer (2) befestigt vorliegen, wobei zwischen dem Bohrgerät (1) und dem Geräteständer (2) die manuelle Vorschubvorrichtung (4) angeordnet vorliegen kann. Unten links in der Zeichnung ist die Bohrkrone (ohne Bezugszeichen) abgebildet, mit der beispielsweise ein Bohrkern aus einem Untergrund, einer Wand oder einer Decke geschnitten werden kann. Fig. 1 zeigt ferner eine mögliche Anordnung der Steuereinrichtung (5) am Bohrgerät (1). Vorzugsweise kann die Steuereinrichtung (5) Bestandteil des Bohrgeräts (1) oder der Vorschubeinrichtung (4) sein. Fig. 2 zeigte eine bevorzugte Ausführungsform der Erfindung, bei der die manuelle Vorschubeinrichtung (4) als Hebel ausgebildet ist. Fig. 3 zeigte eine bevorzugte Ausführungsform der Erfindung, bei der die manuelle Vorschubeinrichtung (4) als Handrad ausgebildet ist. Neben den Bedienteilen (4) zeigen die Figuren 2 und 3 jeweils auch mögliche Anordnungen für den mindestens einen Sensor (6), der dazu eingerichtet ist, Messwerte zu ermitteln. Bei diesen Meswerten handelt es sich vorzugsweise um die Anzahl der Umdrehungen des Bedienteils (4).

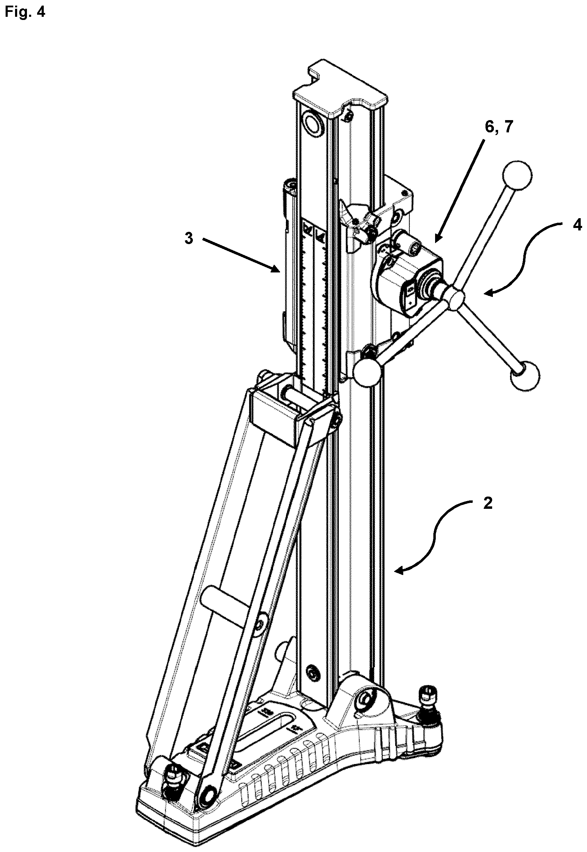

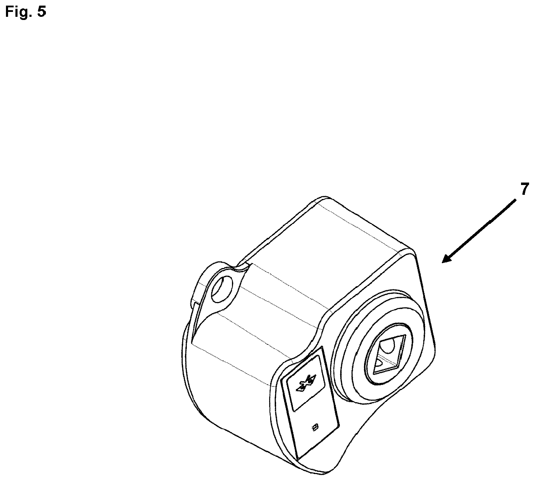

Fig. 4 zeigt eine beispielhafte Ausgestaltung der Erfindung. Insbesondere zeigt Fig. 4 ein Gerätesystem mit einem Geräteständer (2) und einer manuellen Vorschubeinrichtung (4). Darüber hinaus ist in Fig. 4 ein Führungsgehäuse (3). Die manuelle Vorschubeinrichtung (4) ist in Figur 4 als Handrad ausgebildet. Ein Bohrgerät (1) ist in Figur 4 nicht dargestellt. Die manuelle Vorschubeinrichtung (4) ist in Figur 4 mit einer Aufnahmevorrichtung (7) an dem Geräteständer (2) befestigt, wobei in oder an der Aufnahmevorrichtung (7) der mindestens eine Sensor (6) zur Erfassung von Messwerten angeordnet vorliegen kann. Die Aufnahmevorrichtung (7) ist eine mögliche Ausgestaltung einer Zwischenkomponente oder eines Adapters, wie sie insbesondere in Figur 5 dargestellt ist. Es ist im Sinne der Erfindung bevorzugt, dass sich der mindestens eine Sensor (6) in oder an dem Adapter oder in oder an der Zwischenkomponente befindet, wobei die Zwischenkomponente oder der Adapter zwischen der manuellen Vorschubeinrichtung (4) und dem Bohrständer (2) angeordnet vorliegt.

Figur 6 zeigt eine Detailansicht des Führungsgehäuses (3). Das Führungsgehäuse (3) kann innerhalb des Gerätesystems beispielsweise oberhalb der Aufnahmevorrichtung (7) am Geräteständer (2) angeordnet vorliegen. An dem Führungsgehäuse (3) kann beispielsweise das Bedienteil (4) befestigt werden. Das Führungsgehäuse (3) kann verschiedene Zahnräder oder drehbare Komponenten umfassen, die sich bei Bewegung des Bohrgeräts (1) entlang des Geräteständers (2) drehen. Diese Zahnräder oder drehbare Komponenten, die in dem Führungsgehäuse (3) enthalten sein können, werden im Sinne der Erfindung bevorzugt als Bauteile oder Komponenten (8) bezeichnet, die sich für die Erzeugung der Vorschubbewegung des Bohrgeräts (1) drehen bzw. deren Rotation die Vorschubbewegung des Bohrgeräts (1) erzeugt. Wie in Figur 6 dargestellt, kann der Geräteständer (2) das Führungsgehäuse (3), die Grundplatte, sowie die Schiene, entlang derer sich das Bohrgerät (1) bewegt, umfasst. Mit anderen Worten kann das Führungsgehäuse (3) als Bestandteil des Geräteständers (2) des Gerätesystems betrachtet werden. Es ist im Sinne der Erfindung bevorzugt, dass der mindestens eine Sensor (6) zur Ermittlung der Messwerte an dem Geräteständer (2) oder der manuellen Vorschubvorrichtung (4) angeordnet vorliegt. Somit kann der Sensor (6) vorzugsweise auch an dem Führungsgehäuse (3), der Grundplatte oder der Schiene des Geräteständers (2) angeordnet vorliegen.

### Bezugszeichenliste

- 1: Bohrgerät
- 2: Geräteständer
- 3: Führungsgehäuse bzw. Führungsschlitten
- 4: manuelle Vorschubeinrichtung
- 5: Steuereinrichtung
- 6: Sensor
- 7: Adapter bzw. Zwischenkomponente, insbesondere Aufnahmevorrichtung
- 8: für die Erzeugung der Vorschubbewegung des Bohrgeräts drehbares Bauteil

## Patentansprüche

1. Gerätesystem umfassend einen Geräteständer (2), ein am Geräteständer verschiebbar angeordnetes Bohrgerät (1) zur Durchführung einer Bohrung und eine manuelle Vorschubvorrichtung (4) zum Verschieben des Bohrgerätes entlang des Geräteständers, wobei das Gerätesystem eine Steuereinrichtung (5) zur Auswertung von Messwerten für die Bestimmung einer Bohrtiefe umfasst,
**dadurch gekennzeichnet, dass**
das Gerätesystem mindestens einen Sensor (6) zur Ermittlung der Messwerte umfasst, wobei der mindestens eine Sensor (6) dazu eingerichtet ist, die Messwerte an die Steuereinrichtung (5) zu übermitteln, wobei ein Startpunkt und/oder Endpunkt der Bohrung von der Steuereinrichtung (5) durch eine sprunghafte Veränderung von weiteren Bohrparametern erkannt wird, wobei eine Tiefe der Bohrung unter Verwendung eines Übersetzungsverhältnisses und einer Anzahl von Umdrehungen einer an einer Vorschubbewegung des Bohrgeräts (1) beteiligten, rotierenden Komponente (8) des Gerätesystems bestimmbar ist.

2. Gerätesystem nach Anspruch 1
**dadurch gekennzeichnet, dass**
die Anzahl der Umdrehungen mit Hilfe des mindestens einen Sensors (6) ermittelbar ist.

3. Gerätesystem nach Anspruch 1 oder 2
**dadurch gekennzeichnet, dass**
ermittelte und/oder ausgewertete Messdaten zum Auslösen von Funktionen des Gerätesystems oder von Komponenten des Gerätesystems verwendbar sind.

4. Gerätesystem nach einem der vorhergehenden Ansprüche
**dadurch gekennzeichnet, dass**
der mindestens eine Sensor (6) zur Ermittlung der Messwerte an dem Geräteständer (2) oder an einer Zwischenkomponente (7) angeordnet vorliegt.

5. Gerätesystem nach einem der vorhergehenden Ansprüche
**dadurch gekennzeichnet, dass**
die manuelle Vorschubeinrichtung (4) als Handrad oder als Hebel ausgebildet ist.

6. Gerätesystem nach einem der vorhergehenden Ansprüche
**dadurch gekennzeichnet, dass**
die Steuereinrichtung (5) Bestandteil des Bohrgeräts (1) oder der manuellen Vorschubeinrichtung (4) ist.

7. Gerätesystem nach einem der vorhergehenden Ansprüche
**dadurch gekennzeichnet, dass**
der Sensor (6) als Beschleunigungssensor, Gyrosensor, optischer Sensor und/oder Hall-Sensor ausgebildet ist.

8. Gerätesystem nach einem der vorhergehenden Ansprüche
**dadurch gekennzeichnet, dass**
eine Übermittlung der Messwerte von dem Sensor (6) an die Steuereinrichtung (5) kabelgebunden oder kabellos erfolgt.

9. Gerätesystem nach einem der vorhergehenden Ansprüche
**dadurch gekennzeichnet, dass**
ein Motor des Bohrgeräts (1) als Elektromotor ausgebildet ist.

10. Gerätesystem nach einem der vorhergehenden Ansprüche
**dadurch gekennzeichnet, dass**
das Gerätesystem eine Anzeigevorrichtung zur Anzeige von ermittelten und/oder ausgewerteten Daten umfasst.

11. Verfahren zur Ermittlung einer Tiefe einer Bohrung, wobei die Bohrung mit einem Gerätesystem nach einem der vorhergehenden Ansprüche erzeugt wird,
**gekennzeichnet durch die folgenden Verfahrensschritte:**
a) Erfassung von mindestens einem Bohrparameter des Gerätesystems,
b) Ableitung eines Startpunkts und/oder Endpunkts der Bohrung aus dem unter a) erfassten Bohrparameter,
c) Erfassung von Messwerten mittels eines Sensors (6),
d) Übermittlung der Messwerte an eine Steuereinrichtung (5),
e) Bestimmung der Tiefe einer Bohrung basierend auf den unter c) erfassten Messwerten, wobei ein Startpunkt und/oder Endpunkt der Bohrung von der Steuereinrichtung (5) durch eine sprunghafte Veränderung von weiteren Bohrparametern erkannt wird, wobei eine Tiefe der Bohrung unter Verwendung eines Übersetzungsverhältnisses und einer Anzahl von Umdrehungen einer an einer Vorschubbewegung des Bohrgeräts (1) beteiligten, rotierenden Komponente (8) des Gerätesystems bestimmbar ist.

12. Verfahren nach Anspruch 11
**dadurch gekennzeichnet, dass**
die Tiefe der Bohrung auf einem Display des Gerätesystems angezeigt wird.

13. Verfahren nach Anspruch 11 oder 12
**dadurch gekennzeichnet, dass**
eine mindestens weitere Funktion des Gerätesystems auf Grundlage der Tiefe der Bohrung ausgelöst wird.

14. Verfahren nach einem der Ansprüche 11 bis 13
**dadurch gekennzeichnet, dass**
eine Anzahl von Umdrehungen einer an einer Vorschubbewegung des Bohrgeräts (1) beteiligten, rotierenden Komponente (8) des Gerätesystems bestimmt wird und basierend auf der Anzahl von Umgehungen und einem Übersetzungsverhältnis eine Tiefe der Bohrung bestimmt wird.
